# EUROPEAN PATENT SPECIFICATION

(11) **EP 0 444 735 B1**
(45) Date of publication and mention of the grant of the patent: **22.06.1994**
(21) Application number: 91200341.5
(22) Date of filing: 19.02.1991
(51) Int. Cl.: B60P 3/42, B65D 65/00

(54) **Modular motor transport vehicle**
Motorfahrzeug bestehend aus Baueinheiten
Véhicule à moteur modulaire

(30) Priority: 26.02.1990 NL 9000452
(43) Date of publication of application: 04.09.1991
(73) Proprietor: Koninklijke PTT Nederland N.V., 2509 CH Den Haag (NL)
(72) Inventor: Winkel, Barend, NL-2317 KG Leiden (NL)

(56) References cited:
- WO-A-81/02555
- FR-A- 2 067 197
- GB-A- 2 009 056
- US-A- 3 741 605
- US-A- 4 842 326

## Description

### A. BACKGROUND OF THE INVENTION

The invention relates to a motor transport vehicle, in particular a motor transport vehicle suitable for providing special services, such as transporting money or travelling post office or bank, where stringent requirements in relation to security are imposed on the transportation or working space, or such as ambulance service or fire fighting, where the transportation section of the motor vehicle is of a very specialist nature. The front part of both categories of motor transport vehicles is in fact formed by a cabin of relatively normal construction, including drive engine and steering system, while the rear part comprises the elements from which the vehicle derives its special function. Completely different requirements are therefore usually imposed on the rear part of the vehicle from those imposed on the front part. In practice it is often the case - for example in relation to money - transporting vehicles - that the economic service life of the front part is appreciably shorter than that of the rear part. A motor transport vehicle consisting of a front module and a rear module is e.g. known from GB-A- 2 009 056. The front module however consists of a four wheel car.

### B. SUMMARY OF THE INVENTION

The invention is based on the insight that, where the requirements and the economic service life of the front part and the rear part of a motor transport vehicle of the type specified above are so different, said two parts should be modularly constructed and they should be allowed to function coupled together as a "dedicated" vehicle during a certain service period - for example, equal to the shortest economic service life of both modules. Since the economic service life of the "universal" front part is in practice shorter than that of the "dedicated" rear part, the front part will be detached from the rear part after some years have elapsed and will be replaced by a new front part. To conclude, the invention is formed by a motor transport vehicle having a front module for controlling and driving the motor vehicle, comprising a steering system, a drive engine and a set of front wheels which can be controlled by the steering system and can be driven by the drive engine, and also a rear module for receiving goods and/or persons, comprising a working space and at least one set of rear wheels, which front module and rear module each have a coupling face, which coupling faces are connected to each other in a semipermanent, rigid mode. However, it is pointed out that it has, of course, in fact already been known for a long time to place the "dedicated" module of a vehicle on the chassis of said vehicle. The vehicle then has to be provided with a chassis having cabin, engine, steering system and front and rear wheels on which a working or transportation space is mounted or to which it is coupled in another way (for example as container) as the rear module. The drawback of that construction is that the rear module has always to be fairly high, namely above the chassis. The motor transport vehicle according to the invention does not have said drawback since the (single or multiple) rear wheels form part of the said rear module. This makes a motor transport vehicle according to the invention eminently suitable for use as, for example, a travelling "office" (post office, bank or library branch) or as an ambulance. A more detailed development of the invention preferably provides that the said rear module comprises a self-supporting coachwork having a front wall which is essentially parallel to the said coupling face, a rear wall, two side walls having a wheel casing incorporated in each of them, an essentially flat floor, and a roof provided at least at the sides with additional longitudinal reinforcements, which reinforcements adjoin the coupling face of the rear module. In order to obtain adequate stiffness in the plane of the side walls without losing the facility of being able to provide windows or doors in said side walls, provision is furthermore preferably made for the side walls to comprise vertical reinforcements which extend between the said longitudinal reinforcements of the roof and the said wheel casings. The self-supporting coachwork proposed in this way offers, apart from the advantage of a flat and relatively low working floor as well as the ability to provide windows and doors in the side walls and/or rear wall, in addition the facility for allowing the rear part to "kneel". In order to achieve this, the rear module is preferably equipped with a hydraulic or pneumatic kneeling system, which is known per se. According to a more detailed preferred embodiment of the invention, provision is made that the said rear module comprises mechanically independent wheel modules which each comprise, apart from the respective wheel casing, a rear wheel mounted on a swivel axle, which swivel axle is attached to a swivel arm which is attached to the wheel casing so as to swivel, which swivel arm is, in addition, rigidly connected to a spring arm which extends essentially transversely with respect to the swivel arm and which is connected on one side to a pneumatic or hydraulic spring bellows which is supported on the other side against the wheel casing.

### C. EXEMPLARY EMBODIMENTS

### 1. Description of the figures

Figure 1 shows the side elevation of a motor transport vehicle according to the invention.

Figure 2 shows diagrammatically the two modules from which the motor transport vehicle according to the invention is constructed.

Figure 3 shows diagrammatically the independent wheel module.

### 2. Operation

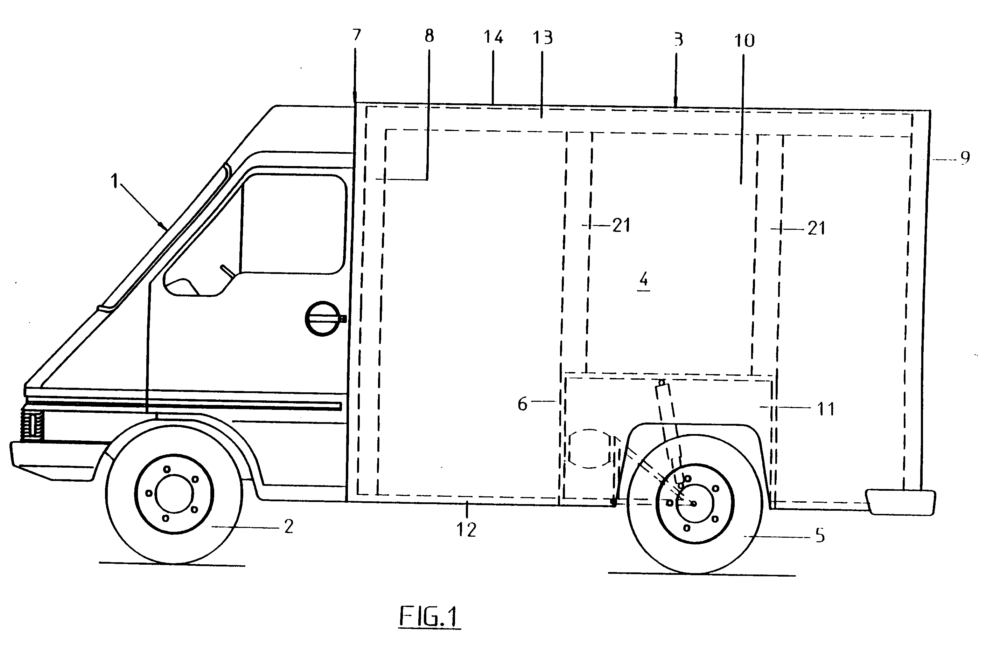

Figure 1 shows the motor transport vehicle according to the invention which is essentially formed by a first module 1 and a second module 3. The first module is formed by the front of a normal commercial light goods vehicle, a so-called "drive unit". The latter comprises a steering system, a drive engine and front wheels 2 controllable by the steering system and drivable by the drive motor. The second module 3 can be used to receive goods and/or persons. Said second module 3 comprises a working space 4 and a set of rear wheels 5, which are a component of two independent wheel modules 11. The first module 1 and the second module 3 are rigidly coupled to each other via the mutual coupling face 7. The second module 3 is built up from a self-supporting coachwork which is provided with a reinforced front wall 8 which serves as coupling face 7 at the side of the second module 3, and moreover with a rear wall 9, two side walls 10 and an essentially flat floor 12. The second module 3 is provided with a roof 14 which is provided, in the longitudinal direction at the sides, with reinforcements 13 which adjoin the reinforced front wall 8. Accommodated in each of the side walls 10 is a wheel module 11, which contains the rear axles, and spring and braking means. All these aspects will be gone into in greater detail below.

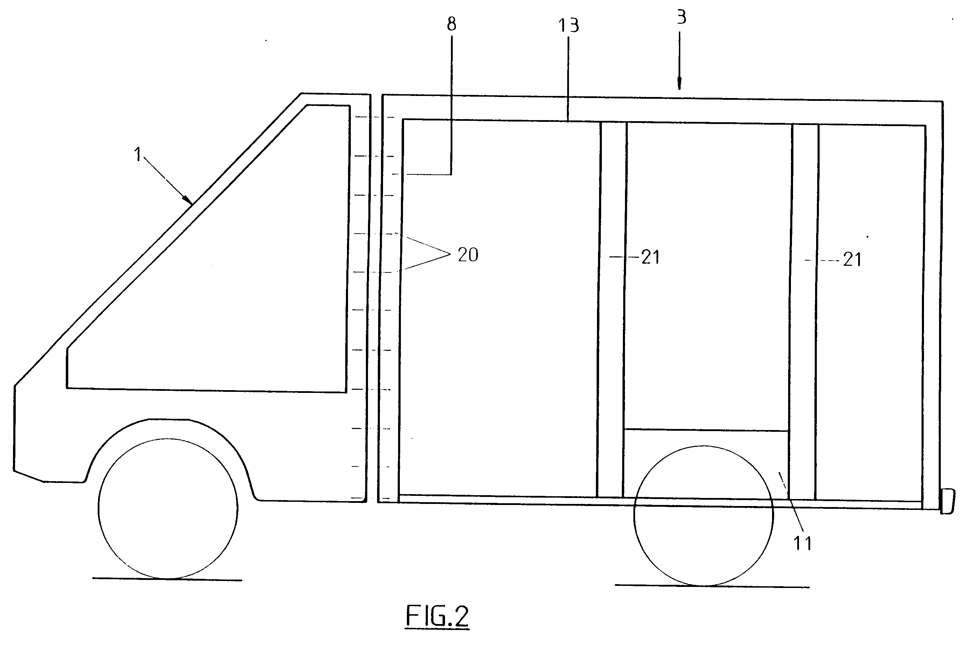

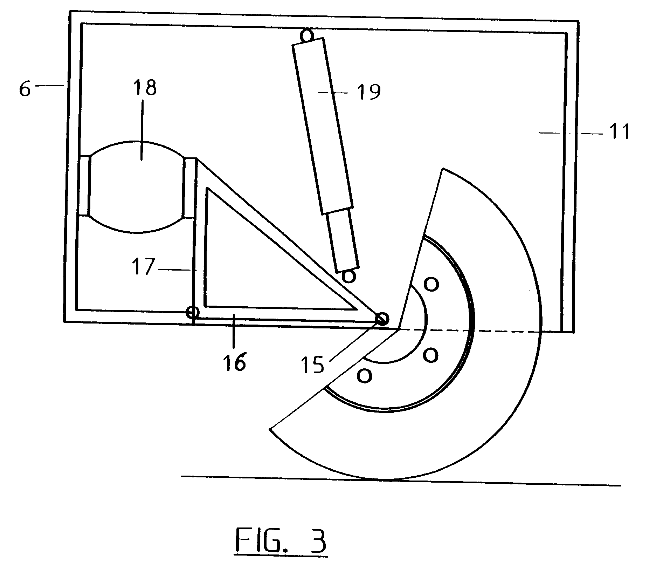

The two modules 1, 3 can be attached to each other with the aid of bolt connections. This is shown diagrammatically in Figure 2. In this figure, the bolt connections with which the two modules are attached to each other are only shown by the centre lines 20 thereof. Furthermore, in said Figure 2, the way in which the second module 3 has been provided with reinforcements in its self-supporting coachwork can be seen. It can be seen that, apart from the reinforced roof strips 13 and the reinforced front wall 8, further reinforcements have been provided at the corner between the side walls and the rear wall and also in the side wall between the wheel modules and the reinforced roof strip 13. The reinforcements visible in said Figure 2 make it possible to achieve the result that the design of the second module can be used for the various applications. Thus, it is possible to accommodate doors or windows in the unreinforced places of the side walls 10 and those of the rear wall 9 without said stiffness of said self-supporting coachwork being affected. The reinforcements shown achieve, inter alia, the result that use can be made of two independent wheel modules built into the side wall instead of a continuous rear axle. The wheel modules are shown in greater detail in Figure 3.

The wheel modules 11 are completely independent of each other and comprise spring means and braking means. As spring means, use is made of hydraulic or, preferably, pneumatic spring bellows 18. Consequently, the result can also be achieved that the rear side of the motor transport vehicle can be lowered in its entirety if desired ("kneeling structure"). The transmission between the spring bellows 18 and the rear wheel is achieved by a construction comprising a swivel arm 16, which is attached to the wheel casing 6 so as to swivel, and a spring arm 17 which is supported on the spring-loaded end of the spring bellows 18 with respect to the wheel casing 6. The swivel arm 16 and the spring arm 17 are rigidly connected to each other to form a triangular structure. In addition, a shock absorber 19 is mounted between the swivel arm and the wheel casing 6. The rear wheels are mounted on the swivel arm 16 by means of a swivel axle 15. The wheel casing 6 is, of course, additionally reinforced at those points which are heavily loaded mechanically. The braking means are not shown in this drawing since they form part, in a manner known per se, of the rear wheels mounted on the swivel axle.

As shown in the present figures, the motor transport vehicle according to the invention thus achieves the advantage that use can be made of a normal commercial front of a vehicle, a so-called "drive unit", while a "dedicated" rear, for example a mobile "office", can be coupled thereto. Said "dedicated" module has a self-supporting coachwork and, in addition, is equipped with independent wheel modules, the operation of which (in particular, the operation of the brakes) can be connected in a simple manner to the "drive unit". The first module 1 and the second module 3 can also be separated from each other again in a relatively simple manner if there is reason for this on grounds of business economics. In this way, a completely different technical or economic service life can be expected for the front, the first module 1, from the service life of the rear, the second module 3. As a result, it is possible, for example, to make greater investments in the second module 3 than would be acceptable if it were also necessary to allow for the economic service life of the first module 1 at the same time.

## Claims

1. Motor transport vehicle consisting of a front module and a rear module characterized by a front module (1) for controlling and driving the motor vehicle, comprising a steering system, a drive engine and a set of front wheels (2) which can be controlled by the steering system and can be driven by the engine, and a rear module (3) for receiving goods and/or persons, comprising a working space (4) and at least one set of rear wheels (5), which front module and rear module each have a coupling face, (7), which coupling faces are connected to each other in a semipermanent, rigid mode.

2. Motor transport vehicle according to Claim 1, characterised in that the said rear module (3) comprises a self-supporting coachwork having a front wall (8) which is essentially parallel to the said coupling face (7), a rear wall (9), two side walls (10) having a wheel casing (6) incorporated in each of them, an essentially flat floor (12), and a roof (14) provided at least at the sides with additional longitudinal reinforcements (13), which reinforcements adjoin the coupling face (7) of the second module.

3. Motor transport vehicle according to Claim 2, characterised in that the side walls (10) comprise vertical reinforcements (21) which extend between the said longitudinal reinforcements (13) of the roof (14) and the said wheel casings (6).

4. Motor transport vehicle according to Claim 2, characterised in that the said rear module (3) comprises mechanically independent wheel modules which each comprise, apart from the respective wheel casing (6), a rear wheel (5) mounted on a swivel axle (15), which swivel axle is attached to a swivel arm (16) which is attached to the wheel casing so as to swivel, which swivel arm is, in addition, rigidly connected to a spring arm (17) which extends essentially transversely with respect to the swivel arm and which is connected on one side to a pneumatic or hydraulic spring bellows (18) which is supported on the other side against the wheel casing.

## Patentansprüche

1. Motortransportfahrzeug bestehend aus einer vorderen Baueinheit und einer hinteren Baueinheit, **gekennzeichnet durch** eine vordere Baueinheit (1) zum Lenken und Antreiben des Motorfahrzeugs, umfassend ein Lenksystem, einen Antriebsmotor und ein Paar Vorderräder (2), die vom Lenksystem gesteuert und vom Motor angetrieben werden können, und eine hintere Baueinheit (3) zum Aufnehmen von Waren und/oder Personen, umfassend einen Arbeitsraum (4) und mindestens ein Paar Hinterräder (5), wobei die vordere Baueinheit (1) und die hintere Baueinheit (3) je eine Kupplungsfront (7) aufweisen, die auf teilpermanente starre Art miteinander verbunden sind.

2. Motortransportfahrzeug nach Anspruch 1, **gekennzeichnet durch** eine hintere Baueinheit (3), umfassend eine selbsttragende Karosseriekonstruktion, die eine Vorderwand (8) aufweist, welche im wesentlichen parallel zur Kupplungsfront (7) verläuft, eine Hinterwand (9), zwei Seitenwände (10) mit je einem eingebauten Radgehäuse (6), einen im wesentlichen flachen Boden (12), und ein Dach (14), das zumindest auf den Seiten mit zusätzlichen Längsverstärkungen (13) versehen ist, wobei die Verstärkungen (13) an die Kupplungsfront (7) der hinteren Baueinheit (3) grenzen.

3. Motortransportfahrzeug nach Anspruch 2, **dadurch** **gekennzeich****net**, **dass** die Seitenwände (10) vertikale Verstärkungen (21) umfassen, die sich zwischen den Längsverstärkungen (13) des Dachs (14) und den Radgehäusen (6) erstrecken.

4. Motortransportfahrzeug nach Anspruch 2, **dadurch** **gekennzeich****net**, **dass** die hintere Baueinheit (3) mechanisch unabhängige Radbaueinheiten (11) umfasst, von denen jede neben dem entsprechenden Radgehäuse (6) ein an eine Schwenkachse (15) montiertes Hinterrad (5) umfasst, wobei die Schwenkachse (15) an einem Schwenkarm (16) befestigt ist, der schwenkbar am Radgehäuse (6) befestigt ist, wobei der Schwenkarm (16) zusätzlich mit einem Federarm (17) starr verbunden ist, der sich im wesentlichen quer zum Schwenkarm (16) erstreckt und der auf einer Seite mit einem pneumatischen oder hydraulischen Federbalg (18) verbunden ist, welcher auf der andern Seite gegen das Radgehäuse (6) abgestützt ist.

## Revendications

1. Véhicule de transport motorisé constitué d'un module avant et d'un module arrière, caractérisé en ce qu'il comprend un module avant (1) pour commander et entraîner le véhicule à moteur, comprenant un système de direction, un moteur d'entraînement et un groupe de roues avant (2) qui peuvent être commandées par le système de direction et entraînées parle moteur, et un module arrière (3) destiné à recevoir des marchandises et/ou des personnes, comprenant un espace de travail (4) et au moins un groupe de roues arrière (5), ledit module avant et ledit module arrière ayant chacun une face d'accouplement (7), lesdites faces d'accouplement étant connectées l'une à l'autre d'une manière rigide semi-permanente.

2. Véhicule de transport motorisé selon la revendication 1, caractérisé en ce que ledit module arrière (3) comprend une structure de cabine auto-porteuse comportant une paroi avant (8) qui est essentiellement parallèle à ladite face d'accouplement (7), une paroi arrière (9), deux parois latérales (10) comportant un carter de roue (6) incorporé dans chacune d'elles, un plancher essentiellement plan (12), et un toit (14) pourvu au moins sur les côtés de renforts longitudinaux additionnels (13) lesdits renforts rejoignants la face d'accouplement (7) du second module.

3. Véhicule de transport motorisé selon la revendication 2, caractérisé en ce que les parois latérales (10) comprennent les renforts verticaux (21) qui s'étendent entre lesdits renforts longitudinaux (13) du toit (14) et lesdits carters de roues (6).

4. Véhicule de transport motorisé selon la revendication 2, caractérisé en ce que ledit module arrière (3) comprend des modules de roue mécaniquement indépendants qui comprennent chacun, outre le carter de roue respectif (6), une roue arrière (5) montée sur un axe de pivotement (15), ledit axe de pivotement étant attaché à un bras pivotant (16) qui est attaché sur le carter de roue de manière à pivoter, et ledit bras pivotant étant en outre rigidement connecté à un bras de suspension (17) qui s'étend essentiellement transversalement par rapport au bras pivotant et qui est relié sur un côté à un soufflet de suspension (18) pneumatique ou hydraulique qui est supporté de l'autre côté contre le carter de roue.
